(19) Europäisches Patentamt
European Patent Office
Office européen des brevets

(11) Veröffentlichungsnummer: **0 006 148**
**B1**

(12) # EUROPÄISCHE PATENTSCHRIFT

(45) Veröffentlichungstag der Patentschrift: **16.02.83**

(51) Int. Cl.³: **C 08 G 12/32,**
C 08 G 12/42, C 08 L 61/28

(21) Anmeldenummer: **79101603.3**

(22) Anmeldetag: **25.05.79**

(54) **Teilverätherte Melamin-Formaldehyd-Harze, Verfahren zu ihrer Herstellung und die aus diesen Melaminharzen hergestellten Pressmassen.**

(30) Priorität: **03.06.78 DE 2824473**

(43) Veröffentlichungstag der Anmeldung:
**09.01.80 Patentblatt 80/1**

(45) Bekanntmachung des Hinweises auf die Patenterteilung:
**16.02.83 Patentblatt 83/7**

(84) Benannte Vertragsstaaten:
**AT BE CH DE FR GB IT NL SE**

(56) Entgegenhaltungen:
**DE - A - 2 254 450**
**DE - A - 2 356 298**
**DE - A - 2 603 767**
**DE - A - 2 603 768**
**DE - A - 2 254 575**
**FR - A - 2 032 379**

(73) Patentinhaber: **CASSELLA Aktiengesellschaft**
**Hanauer Landstrasse 526**
**D-6000 Frankfurt am Main 61 (DE)**

(72) Erfinder: **Piesch, Steffen, Dr.**
**An der Heide 32**
**D-6370 Oberursel (DE)**
Erfinder: **Wolf, Alfons**
**Einhardstrasse 34**
**D-6453 Seligenstadt (DE)**

(74) Vertreter: **Urbach, Hans-Georg, Dr. et al,**
**Hanauer Landstrasse 526**
**D-6000 Frankfurt am Main 61 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 006 148 B1

# Teilverätherte Melamin-Formaldehyd-Harze, Verfahren zu ihrer Herstellung und die aus diesen Melaminharzen hergestellten Pressmassen

Die Erfindung betrifft teilverätherte Melaminharze mit einem Molverhältnis Melamin:Formaldehyd = 1:(1,25 bis 1,0), die nach der Verarbeitung zu Formmassen praktisch keine Verarbeitungs- und Nachschwindung zeigen, sowie ein Verfahren zur Herstellung der teilverätherten Melaminharze und die aus den Melaminharzen hergestellten Preßmassen.

Aus Kunstpreßmassen werden Formteile der verschiedensten Art, wie z.B. Küchengeschirr, Tabletts, Telefon-, Radio-, Uhren- und Fernsehgehäuse, Knöpfe, Armaturen, elektrische Isolierteile und ähnliches hergestellt. Bei der Herstellung von größeren Formteilen aus Kunstharzen müssen geringe Werte für die Verarbeitungsschwindung und Nachschwindung eingehalten werden, um eine einwandfreie Verarbeitung der Formteile zu ermöglichen und ein späteres Reißen der Formteile zu verhindern. Derartige Forderungen werden z.B. von Phenolharzpreßmassen, vor allem aber von Polyesterharz- und Epoxidharzpreßmassen erfüllt. Zum Teil sind diese Harze teuer, auch besitzen die daraus hergestellten Formteile zum Teil noch unerwünschte thermoplastische Eigenschaften oder sind nicht ausreichend lösungsmittel- oder hitzebeständig. Formteile, die in der Elektroindustrie verwendet werden, wie z.B. Schalter, Knöpfe, Sicherungshalter, Chasisteile, Fassungen für Transistoren, integrierte Schaltkreise und dergl. müssen darüberhinaus in ausreichendem Maße kriechstromfest sein.

Melaminharzpreßstoffe zeigen größere Nachschwindungswerte als z.B. Phenolharzpreßmassen und vor allem Polyesterharz- und Epoxiharzpreßmassen. Diese Nachschwindung üblicher Melaminharzpreßteile läßt ihre Verwendung nur dort zu, wo die Toleranzen groß sind und die Erwärmung gering ist. Durch Verwendung hoher Anteile spezieller anorganischer Füllmittel, z.B. Aluminiumoxidhydrat (vgl. DE—OS 23 56 298), Gesteinsmehl etc., kann die Nachschwindung verringert werden, jedoch müssen dabei meist schlechtere Fließeigenschaften bei der Verarbeitung der Melaminharzpreßmassen in Kauf genommen werden.

Aus der DE—OS 22 54 450 ist ein kontinuierliches oder halbkontinuierliches Verfahren zur Herstellung von Melamin-Formaldehyd-Harzlösungen bekannt, bei dem Melamin und Formaldehyd im Molverhältnis 1:(1 bis 6), vorzugsweise 1:(1,5 bis 2,5) gegebenenfalls in Gegenwart von Polyolen, wie Äthylenglykol, Glyzerin oder Glyzerinmonoäthyläther, kondensiert werden, wobei man während der Reaktion kontinuierlich oder periodisch einen Teil des Reaktionsgemisches abläßt und durch eine gleiche Menge frischer Reaktionsteilnehmer im richtigen Verhältnis ersetzt.

Die französische Patentschrift 2 032 379 betrifft ein Verfahren zur Herstellung von Modifikationsmitteln für Aminoplastharze. Bei diesem Verfahren wird wasserfreier Formaldehyd (Paraformaldehyd) z.B. mit Melamin in einem wasserfreien, organischen hydroxylgruppenhaltigen Lösungsmittel umgesetzt, wobei das Molverhältnis Melamin:Formaldehyd 1:kleiner 1,1, vorzugsweise 1:kleiner 1,0, beträgt.

Aus den DE—OS 26 03 767 und 26 03 768 sind elektrolytfreie Melaminharze bekannt, die Preßformlinge mit hohem elektrischen Widerstand und hoher elektrischer Kriechstromfestigkeit liefern. Die Verarbeitung und Nachschwindung der mit diesen bekannten Melaminharzen hergestellten Preßmassen ist jedoch für die Herstellung größerer Formteile noch zu groß.

Es wurde nun überraschenderweise gefunden, daß die erfindungsgemäßen teilverätherten Melamin-Formaldehyd-Harze bei der Verarbeitung zu Preß- bzw. Formmassen, unabhängig von dem verwendeten Füllmittel, nur noch minimale Werte für die Verarbeitung und Nachschwindung zeigen. Die erfindungsgemäßen teilverätherten Melamin-Formaldehyd-Harze mit einem Molverhältnis Melamin:Formaldehyd von 1:(1,25 bis 1), vorzugsweise 1:(1,2 bis 1,12) sind dadurch gekennzeichnet, daß sie mit einem Glykolmonoäther der allgemeinen Formel I

$$R(OCH_2CH_2)_nOH \qquad (I)$$

worin R Alkyl mit 1 bis 4 C-Atomen und n eine ganze Zahl von 1 bis 5 bedeutet, veräthert sind.

Die erfindungsgemäßen Melamin-Formaldehyd-Harze lassen sich in einfacher Weise herstellen, indem man Melamin und Formaldehyd im Molverhältnis 1:(1,25 bis 1), vorzugsweise 1:(1,2 bis 1,12) in Gegenwart eines Glykolmonoäthers der allgemeinen Formel I als Lösungs- und Verätherungsmittel und in Gegenwart einer kleinen Menge eines solchen Elektrolyten vornimmt, daß sich bei der Kondensation ein annähernd neutraler bis schwach alkalischer pH-Wert, vorzugsweise ein pH-Wert von 7,2 bis 8,5 einstellt. Die entstehenden Harze sind teilveräthert und können in hoher Konzentration und hoher Viskosität hergestellt werden, was die Verarbeitbarkeit zu Preßmassen erleichtert.

Der Formaldehyd wird normalerweise in Form der üblichen 39%igen wäßrigen Lösung eingesetzt. Aber auch Paraformaldehyd oder höher konzentrierte Formaldehydlösungen oder Lösungen von Formaldehyd in den Glykolmonoäthern der Formel I können eingesetzt werden. Bezogen auf ein Mol des zur Anwendung kommenden Formaldehyds werden 1 bis 6 Mole Glykolmonoäther der Formel I verwendet. Ein Überschuß an Glykolmonoäther kann nach beendeter Kondensation, zweckmäßigerweise unter vermindertem Druck, abdestilliert werden. Von dem Elektrolyten, der bei der Kondensation einen annäherend neutralen bis schwach alkalischen pH-Wert, vorzugsweise einen pH-Wert von 7,2 bis 8,5 einstellt, sind normalerweise 0,05 bis 0,8 Gew.%, bezogen auf den Festkörpergehalt des fertigen

Harzes, erforderlich. Geeignete Elektrolyte sind z.B. Alkalihydroxide oder -karbonate, wie z.B. Natrium- oder Kaliumhydroxid oder Kalium- oder Natriumkarbonat oder Aminoalkohole, vorzugsweise tertiäre Aminoalkohole, wie z.B. Aminoäthanol, 3-Aminopropanol, N-Methylaminoäthanol, N-Äthylaminoäthanol, N,N-Dimethylaminoäthanol, N,N-Diäthylaminoäthanol, N,N-Dipropylaminoäthanol, N,N-Dimethyl-, -diäthyl- oder -dipropylaminopropanol. Auch Mischungen verschiedener geeigneter Elektrolyten können eingesetzt werden. Bei der Verwendung der bevorzugten tertiären Aminoalkohole ist normalerweise ein Zusatz von 0,1 bis 0,5 Gew.%, bezogen auf den Festkörpergehalt des fertigen Harzes, ausreichend. Die Kondensation wird bei Temperaturen von 50 bis 150°C, vorzugsweise 80 bis 120°C, zweckmäßigerweise unter Rühren vorgenommen, bis der gewünschte Kondensationsgrad erreicht ist. Der Kondensationsgrad wird wie üblich durch die Bestimmung der Wasserverdünnbarkeit gemessen. Dabei wird ein abgemessenes Volumen Harz bei 20°C bis zum Auftreten einer dauernden Trübung mit Wasser titriert. Die Angabe Wasserverdünnbarkeit 1:0,5 besagt somit, daß beim Vermischen von 1 Volumenteil Harz mit 0,5 Volumenteilen Wasser eine dauernde Trübung auftritt.

In der Regel wird solange kondensiert, bis eine Wasserverdünnbarkeit von 1:0,5 bis 1:2,5, vorzugsweise 1:0,5 bis 1:1,1 erreicht ist. Dann wird unter vermindertem Druck, in der Regel im Wasserstrahlvakuum bei ca. 10 bis 100 mbar, das eingesetzte Wasser und das entstandene Reaktionswasser abdestilliert, wobei eventuell auch überschüssiger Glykolmonoäther der Formel I mit übergeht. Je nach den bei der Kondensation zur Anwendung kommenden Temperaturen destilliert schon während der Kondensation ein Teil des Wassers ab.

Glykolmonoäther der allgemeinen Formel I, die zur Herstellung der erfindungsgemäßen teilverätherten Harze verwendet werden können, sind beispielsweise Methylglykol, Äthylglykol, Diglykolmonomethyläther, Diglykolmonoäthyläther, Diglykolmonopropyläther, Triglykolmonomethyläther, Triglykolmonoäthyläther, Triglykolmonopropyläther, Triglykolmonobutyläther, Tetraglykolmonomethyläther, Tetraglykolmonoäthyläther, Tetraglykolmonopropyläther, Tetraglykolmonobutyläther, Pentaglykolmonomethyl-, -äthyl-, -propyl- oder -butyläther. Auch Mischungen verschiedener Glykolmonoäther der allgemeinen Formel I können verwendet werden.

Zur Verbesserung beispeilsweise der Schlagzähigkeit der Formkörper kann es zweckmäßig sein, bei der Harzherstellung von oder während der Kondensation bis zu 5 Gew.%, bezogen auf Gesamtfestkörpergehalt des fertigen Harzes, eines Vernetzers der allgemeinen Formel II

$$HO-(CH_2-\underset{\displaystyle R'}{\underset{|}{C}}HO)_m-H \qquad (II)$$

wobei R', $-H$, $-CH_3$ oder $-CH_2OH$ und m eine ganze Zahl von 1 bis 4 sein kann, zuzusetzen. Beispiele für solche Vernetzer sind: Glykol, Äthylendiglykol, Athylentriglykol, Äthylentetraglykol, Propylenglykol, Dipropylenglykol, Tripropylenglykol, Tetrapropylenglykol, Glyzerin, Polyglyzerin.

Nach der geschilderten Methode lassen sich erfindungsgemäße Harze mit einem Molverhältnis Melamin:Formaldehyd von 1:(1,25 bis 1,12) herstellen. Die Herstellung von Harzen mit einem Molverhältnis Melamin:Formaldehyd = 1:(1,12 bis 1,0) erfordert den Zusatz von Äthylen- oder Propylenharnstoff zur Abfangung des in dem Kondensationsansatz vorhandenen überschüssigen Formaldehyds, d.h. des Formaldehydanteils, der über das Molverhältnis 1:1,12 hinausgeht.

Die erfindungsgemäßen Harze sind geruchsarm, wobei die Geruchsarmut mit fallendem Formaldehydgehalt abnimmt. Harze mit einem Molverhältnis Melamin:Formaldehyd = 1:(1,12 bis 1,0) sind auch bei der Weiterverarbeitung geruchsfrei.

Die erfindungsgemäßen Harze können in an sich bekannter Weise zu Preßmassen verarbeitet werden. Die Herstellung und Verarbeitung von Preßmassen ist z.B. beschrieben in Ullmanns Encyclopädie der techn. Chemie, 3. Auflage, Band 14 (1963), S. 364—374 und in Bachmann-Bertz: "Aminoplaste" (1967), S. 93—122. Bei der Herstellung der Preßmassen wird das Harz mit Füllstoff und weiteren Zusätzen, wie z.B. Farbstoffen, Fließhilfsmitteln, Gleit- und Trennmitteln, Härter bzw. Härtungsbeschleuniger vermischt, verknetet, getrocknet, zerkleinert bzw. granuliert und eingefärbt, wobei die einzelnen Verarbeitungsstufen normalerweise nicht scharf voneinander zu trennen sind, da mehrere Vorgänge während eines einzigen Arbeitsvorganges ablaufen. Bekannte Füllstoffe sind z.B. Holzmehl, Zellstoff, Celluloseesterpulver, Gesteinsmehl, Glasmehl, Glasfasern, Baumwollflocken, Mehl, Stärke, Torf, Asbestfasern, Graphit, Glimmerschuppen, Linters, Hanf, synthetische Fasern, Kreide, Kalk, Gips, Schamotte, Metallstaub, wie z.B. Kupferpulver, usw., von denen Holzmehl und Zellstoff bevorzugt sind.

An sich bekannte Härter bzw. Härtungsbeschleuniger sind z.B. Säuren oder säureabspaltende Verbindungen. Durch die Auswahl geeigneter Härter bzw. Härtungsbeschleuniger kann die gewünschte Härtungsgeschwindigkeit der Preßmassen eingestellt werden, ohne daß ihre Schmelzviskosität wesentlich erhöht wird. Geeignete Härter sind z.B. Bernsteinsäure-anhydrid, Phthalsäure-anhydrid, Maleinsäure-anhydrid, Benzoltetracarbonsäure-anhydrid, Polyphosphorsäureester, vorzugsweise jedoch das System Ameisensäure:Wasserstoffperoxid. Die Ameisensäure ist dabei in der Regel 85 gew%ig das Wasserstoffperoxid 30 gew%ig und das Mischungsverhältnis Ameisensäure:Wasserstoffperoxid beträgt normalerweise 1:0,75 Gewichtsteile. Von dem Ameisensäure:Wasserstoffperoxid-Härter, der nach der Aushärtung keine Rückstände hinterläßt, werden maximal 2 Gew.%, vorzugsweise 0,5 bis 1,5 Gew.%, bezogen auf das Gesamtgewicht der Preßmasse, angewandt. Bei Verwendung anderer Härter müssen eventuell höhere Mengen zur Anwendung kommen.

Bekannte Fließhilfsmittel sind Sorbit, Glykole und Glykolderivate und Polyglykole. Als Gleit- oder Trennmittel, die für die einwandfreie Ablösung des Formkörpers von der Preßform erforderlich sind, werden Metallstearate, vorzugsweise Zink-, Calcium- und Magnesiumstearat eingesetzt.

Für die Einfärbung können organische und anorganische Pigmente und lösliche Farbstoffe benutzt werden. Geeignete anorganische Pigmente basieren im allgemeinen auf Sulfiden, Oxiden oder Mischoxiden von Metallen, insbesondere von Titan, Zink, Eisen, Chrom, Kobalt, Blei und Cadmium. Ein bevorzugtes schwarzes Pigment ist Ruß. Als organische Pigmente kommen die im Colourindex als Pigment Dyes gekennzeichneten Verbindungen in Betracht. Die Zusätze müssen dem gewünschten Zweck entsprechend ausgewählt werden.

So erhöhen z.B. hohe Gehalte an Graphit und Ruß die elektrische Leitfähigkeit. Durch weitere an sich bekannte Zusätze, wie z.B. Leuchtstoffen, lassen sich spezielle Eigenschaften erzielen.

Das Verhältnis von Harz zu Füllstoff wird bekanntlich von der Füllstoffart und -struktur bestimmt. Das Harz-Füllstoff-Verhältnis schwankt bei der Herstellung bekannter Preßmassen zwischen 25:75 bis 70:30, d.h. auf 1 Gewichtsteil Harz werden 0,43 bis 3 Gewichtsteile Füllstoff zugemischt. Dieses Harz-Füllstoff-Verhältnis kommt auch bei der Herstellung von Preßmassen unter Verwendung der erfindungsgemäßen Harze zur Anwendung.

Das Mischen der erfindungsgemäßen Melamin-Formaldehyd-Harze mit dem Füllstoff und den weiteren Zusatzstoffen erfolgt in bekannten Mischaggregaten, wie beispielsweise, Mischwalzwerken, Mischschnecken, Kneter, Schneckenkneter, zweckmäßigerweise bei Temperaturen zwischen 70 und 140°C, vorzugsweise 105 bis 120°C. Das Verkneten bei erhöhter Temperatur bringt in bezug auf die zum Verkneten erforderliche Energie und die erzielbare Homogenität des Gemisches wesentliche Vorteile. Nach der Mischung wird das erhaltene Gemisch auf Zimmertemperatur abgekühlt, wobei es im allgemeinen fest wird. Das feste Produkt wird dann wie üblich zerkleinert bzw. granuliert und kann danach in an sich bekannter Weise durch Pressen, Spritzpressen oder Strangpressen zu Formpreßteilen verarbeitet werden. Das Verpressen erfolgt im allgemeinen bei Temperaturen zwischen 120 und 180°C vorzugsweise 140 und 170°C unter Drucken von 150 bis 800 bar, vorzugsweise 200 bis 500 bar. Die Preßdauer beträgt in der Regel 30 Sekunden bis 5 Minuten. Preßmassen, die mit den erfindungsgemäßen Harzen hergestellt worden sind, zeigen hohes Fließvermögen und minimale Verarbeitungs- und Nachschwindung. Bei Harzen mit einem Molverhältnis Melamin:Formaldehyd = 1:(1,20 bis 1) gehen die Werte für die Verarbeitungs- und Nachschwindung sogar praktisch auf Null zurück. Bei den mit den erfindungsgemäßen Harzen hergestellten Preßmassen ist aufgrund der geringeren Reaktivität, der Schwindungsfreiheit und der Rißstabilität eine größere Verarbeitungsbreite als bei üblichen Melamin-Preßharzen gegeben. Sie härten farblos aus, bleiben auch bei Temperaturbelastung vergilbungsfrei und bieten somit unbegrenzte Einfärbungsmöglichkeiten. Die Harze können z.B. Verwendung finden als schwindungsfreie, kriechstromfeste, beliebig einfärbbare Isolierstoffe in Preßmassen für Eß- und Trinkgeschirr, in der Fahrzeugindustrie, z.B. Brems- und Kupplungsbelägen, sowie zur Herstellung maßhaltiger Formteile aller Art.

In den nachfolgenden Beispielen sind, wenn nichts anderes angegeben, Teile Gewichtsteile, Prozente Gewichtsprozente; die Temperaturen sind in Grad Celsius angegeben.

Beispiel 1

7,5 kg wäßrige 39%ige Formaldehydlösung, 7,5 kg Wasser, 40 g Dimethylamonoäthanol, 10,4 kg Melamin und 9,4 kg Äthylpolyglykol (ein Gemisch aus ca. 70% Äthyldiglykol, 20% Äthyltriglykol und 10% Äthyltetraglykol) werden bei 100°C so lange gerührt, bis eine Wasserverdünnbarkeit von 1:1,0 erreicht worden ist. Nun wird im Wasserstrahlvakuum das eingesetzte Wasser und das entstandene Reaktionswasser abdestilliert (insgesamt ca. 12,7 kg). Man erhält 22 kg eines praktisch 100%igen Preßmassenharzes hoher Viskosität, das sich mit Wasser noch im Verhältnis 1:2 verdünnen läßt. Das Molverhältnis Melamin/$CH_2O$/Äthylpolyglykol beträgt 1:1,18:0,8.

Beispiel 2

600 g wäßrige 39%ige Formaldehydlösung, 5 g Dimethylaminoäthanol, 700 g Wasser, 700 ml Methyldiglykol, 50 g Diglykol (als Vernetzer) und 810 g Melamin werden unter Rühren bei 110°C ca. 3 Stunden lang bis zu einer Wasserverdünnbarkeit von 1:1,0 kondensiert. Dann werden im Wasserstrahlvakuum ca. 700 ml Wasser abdestilliert. Das erhaltene Harz ist 71%ig, und sein Molverhältnis Melamin:Formaldehyd beträgt 1:1,21; die Eigenschaften des mit dem Harz hergestellten Formkörpers sind in der Tabelle angegeben.

Beispiel 3

923 g wäßrige 39%ige Formaldehydlösung, 1020 g Wasser, 660 g Äthylpolyglykol der Zusammensetzung wie in Beispiel 1 angegeben, 6 g Dimethylaminoäthanol, 120 g Diglykol, 1260 g Melamin werden unter Rühren bei einer Badtemperatur von 120°C bis zu einer Wasserverdünnbarkeit von 1:1,0 kondensiert. Dann werden im Wasserstrahlvakuum ca. 1100 g. Wasser abdestilliert. Das

erhaltene Harz ist ca. 60%ig, und sein Molverhältnis Melamin:Formaldehyd beträgt 1:1,20. Die Eigenschaften des mit dem Harz hergestellten Formkörpers sind in der nachfolgenden Tabelle angegeben.

Beispiel 4

360 g wäßrige 39%ige Formaldehydlösung, 2 g Dimethylaminoäthanol, 360 g Wasser, 500 g Melamin und 450 g Äthyltriglykol werden bei 100°C bis zu einer Wasserverdünnbarkeit von 1:0,5 kondensiert, anschließend werden im Wasserstrahl-Vakuum 300 ml Wasser abdestilliert. Das Endprodukt hat eine Wasserverdünnbarkeit von 1:1,2. Die Eigenschaften der mit diesem Harz erhaltenen Formkörper sind in der nachfolgenden Tabelle angegeben.

Beispiel 5

1800 g wäßrige 39%ige Formaldehydlösung, 2100 g Wasser, 1650 g Methyldiglykol, 10 g Dimethylaminoäthanol und 2400 g Melamin (Melamin:Formaldehyd = 1:1,23) werden bis zu einer Wasserverdünnbarkeit von 1:1,0 bei 100°C kondensiert. Im Wasserstrahlvakuum werden ca. 1950 ml Wasser abdestilliert. Die Wasserverdünnbarkeit des erhaltenen Harzes beträgt 1:2,7. Die Eigenschaften des mit diesem Harz erhaltenen Formkörpers sind in der nachfolgenden Tabelle angegeben.

Beispiel 6

720 g wäßrige 39%ige Formaldehydlösung, 1 g $K_2CO_3$, 1000 g Melamin, 600 g Wasser, 1000 g Äthylpolyglykol der in Beispiel 1 angegebenen Zusammensetzung werden bei 102°C ca. 12 Stunden lang unter Rühren bis zu einer Wasserverdünnbarkeit von 1:1,1 kondensiert, dann werden bei einer Innentemperatur von 50°C und einem Druck von 56,5 mbar ca. 520 g Wasser abdestilliert. Das erhaltene Harz ist 62%ig und hat ein Molverhältnis von Melamin:Formaldehyd von 1:1,179. Die Eigenschaften des mit dem Harz hergestellten Formkörpers sind in der nachfolgenden Tabelle angegeben.

Die Gehaltbestimmung der Harze wurde aus dem Gewichtsverlust berechnet, den eine Probe erleidet, die 1 Stunde lang bei einem Druck von 13,3 mbar auf 120°C erhitzt wird.

Beispiel 7 (Vergleichsbeispiel)

700 g wäßrige 39%ige Formaldehydlösung, 700 g Wasser, 400 g Methyldiglykol, 5 g Dimethylaminoäthanol und 810 g Melamin (Melamin:Formaldehyd = 1:1,41) werden bei 100°C bis zu einer Wasserverdünnbarkeit von 1:1,0 kondensiert, dann wird im Wasserstrahlvakuum Wasser abdestilliert. Man erhält 1800 g eines 75%igen Harzes mit einer Wasserverdünnbarkeit von 1:2,0. Die Eigenschaften des mit diesem Harz erhaltenen Formkörpers sind in der nachfolgenden Tabelle angegeben.

Beispiel 8

440 g wäßrige 39%ige Formaldehydlösung, 500 g Wasser, 350 g Methyldiglykol, 3 g Dimethylaminoäthanol, 40 g Diglykol und 600 g Melamin werden ca. 3 Stunden lang bei 100°C bis zu einer Wasserverdünnbarkeit von 1:1 gerührt. Dann werden im Wasserstrahlvakuum ca. 400 ml Wasser abdestilliert und anschließend bei 50°C 45 g Äthylenharnstoff eingerührt. Des erhaltene Harz ist 82%ig, es besitzt ein Molverhältnis Melamin:Formaldehyd = 1:1 und ist unbegrenzt mit Methyldiglykol verdünnbar. Beim thermischen Auskondensieren unter saurer Katalyse wird kein Formaldehyd frei, d.h. das Kondensat ist auch unter Verarbeitungsbedingungen geruchsfrei.

Zur Bestimmung der Verarbeitungs- und Nachschwindung gemäß DIN 53 464 und der Kriechstromfestigkeit gemäß DIN 53 480 wurden Preßmassen Typ 152 gemäß DIN 7708 wie folgt hergestellt:

70 Teile Harz, 30 Teile Cellulose, 1 Teil Zinkstearat, 1 Teil Härter, des in der Beschreibung erwähnten Systems:Ameisensäure (85%ig):Wasserstoffperoxid (30%ig) = 1:0,75, werden auf einem Walzenstuhl bei 110°C zu einem Walzfell ausgewalzt. Nach dem Granulieren des Walzfelles wird in einer Normstabform bei 150 bis 155°C, 250 bar und 8 Minuten Preßdauer ein Formkörper hergestellt. Die an den hergestellten Formkörpern erhaltenen Ergebnisse sind in der folgenden Tabelle zusammengestellt:

Tabelle

| Preßmasse Typ 152 nach DIN 7708 | Molverhältnis des Harzes Melamin:Formaldehyd | Schwindung nach DIN 53464 Verarbeitungsschwindung in % | Nachschwindung in % | Kriechstromfestigkeit nach DIN 53 480 |
|---|---|---|---|---|
| Handelsübliches Melaminharz | 1:2,6 | 0,46 | 1,1 | KA3c |
| Handelsübliches Melaminharz | 1:1,8 | 0,4 | 1,0 | KA3c |
| Handelsübliches Melaminharz | 1:1,65 | 0,4 | 0,9 | KA3c |
| Beispiel 7 | 1:1,41 | 0,38 | 0,85 | KA3b |
| Beispiel 5 | 1:1,23 | 0,25 | 0,5 | KA3c |
| Beispiel 2 | 1:1,21 | 0,25 | 0,45 | KA3c |
| Beispiel 3 | 1:1,20 | 0 | 0 | KA3c |
| Beispiel 1 | 1:1,18 | 0 | 0 | KA3c |
| Beispiel 4 | 1:1,18 | 0 | 0,05 | KA3b |
| Beispiel 6 | 1:1,18 | 0 | 0 | KA3c |

Die mit den erfindungsgemäßen Harzen hergestellten Preßmassen entsprechen im übrigen den sonstigen in den DIN-Vorschriften für Preßmassen gestellten Anforderungen.

**Patentansprüche für die Vertragsstaaten: BE CH DE FR GB IT NL SE**

1. Teilveräthertes Melamin-Formaldehyd-Harz mit einem Molverhältnis Melamin:Formaldehyd von 1:(1,25 bis 1), dadurch gekennzeichnet, daß es mit einem Glykolmonoäther der allgemeinen Formel I

$$R(OCH_2CH_2)_nOH \qquad (I)$$

worin R Alkyl mit 1 bis 4 C-Atomen und n eine ganze Zahl von 1 bis 5 bedeutet, veräthert ist.

2. Teilveräthertes Melamin-Formaldehyd-Harz nach Anspruch 1, gekennzeichnet durch ein Molverhältnis Melamin:Formaldehyd von 1:(1,2 bis 1,12).

3. Teilveräthertes Melamin-Formaldehyd-Harz nach Anspruch 1 oder 2, dadurch gekennzeichnet, daß es, bezogen auf den Festkörpergehalt, bis zu 5 Gew.% eines Glykols der allgemeinen Formel II

$$HO-(CH_2-\underset{\displaystyle R'}{\underset{|}{C}}HO)_m-H \qquad (II)$$

wobei R', $-H$, $-CH_3$ oder $-CH_2OH$ und m eine ganze Zahl von 1 bis 4 bedeutet, enthält.

4. Teilveräthertes Melamin-Formaldehyd-Harz nach einem oder mehreren der Ansprüche 1 bis 3, dadurch gekennzeichnet, daß es bei einem Molverhältnis Melamin:Formaldehyd von 1:(1,12 bis 1) neben Melamin noch Äthylen- und/oder Propylenharnstoff enthält.

5. Verfahren zur Herstellung teilverätherter Melamin-Formaldehyd-Harze der Ansprüche 1 bis 4, dadurch gekennzeichnet, daß Melamin und Formaldehyd im Molverhältnis 1:(1,25 bis 1) in Gegenwart eines Glykolmonoäthers der allgemeinen Formel I

$$R(OCH_2CH_2)_nOH \qquad (I)$$

worin R Alkyl mit 1 bis 4 C-Atomen und n eine ganze Zahl von 1 bis 5 bedeutet, und in Gegenwart eines solchen Elektrolyten, daß sich ein annähernd neutraler bis schwach alkalischer pH-Wert einstellt, bis zu einer Wasserverdünnbarkeit von 1:(0,5 bis 2,5) kondensiert werden, wobei bei Molverhältnissen Melamin:Formaldehyd von 1:(1,12 bis 1) in Gegenwart von Athylen- und/oder Propylenharnstoff kondensiert wird.

6. Verfahren nach Anspruch 5, dadurch gekennzeichnet, daß in Gegenwart von 0,05 bis 0,8 Gew.% Elektrolyt, bezogen auf den Festkörpergehalt des fertigen Harzes, kondensiert wird.

7. Verfahren nach den Ansprüchen 5 oder 6, dadurch gekennzeichnet, daß in Gegenwart eines Alkalihydroxids, Alkalikarbonats und/oder Aminoalkohols kondensiert wird.

8. Verfahren nach einem oder mehreren der Ansprüche 5 bis 7, dadurch gekennzeichnet, daß bei Temperaturen von 50 bis 150°C bis zu einer Wasserverdünnbarkeit von 1:(0,5 bis 1,1) kondensiert wird.

9. Verfahren nach einem oder mehreren der Ansprüche 5 bis 8, dadurch gekennzeichnet, daß, bezogen auf den Festkörpergehalt, bis zu 5 Gew.% eines Glykols der allgemeinen Formel II

$$HO-(CH_2-\underset{\displaystyle R'}{\underset{|}{C}}HO)_m-H \qquad (II)$$

wobei R', —H, $-CH_3$ oder $-CH_2OH$ und m eine ganze Zahl von 1 bis 4 bedeutet, hinzugefügt werden.

10. Aminoplastpreßmasse mit einem Verhältnis Harz:Füllstoff von 1:(0,42 bis 3), dadurch gekennzeichnet, daß sie in an sich bekannter Weise aus Füllstoff, Zusatzstoffen und dem Harz nach einem oder mehreren der Ansprüche 1 bis 4 hergestellt worden ist.

**Patentansprüche für den Vertragsstaat: AT**

1. Verfahren zur Herstellung teilverätherter Melamin-Formaldehyd-Harze mit einem Molverhältnis Melamin:Formaldehyd von 1:(1,25 bis 1), dadurch gekennzeichnet, daß Melamin und Formaldehyd im Molverhältnis 1:(1,25 bis 1) in Gegenwart eines Glykolmonoäthers der allgemeinen Formel I

$$R(OCH_2CH_2)_nOH \qquad (I)$$

worin R Alkyl mit 1 bis 4 C-Atomen und n eine ganze Zahl von 1 bis 5 bedeutet, und in Gegenwart eines solchen Elektrolyten, daß sich ein annähernd neutraler bis schwach alkalischer pH-Wert einstellt, bis zu einer Wasserverdünnbarkeit von 1:(0,5 bis 2,5) kondensiert werden, wobei bei Molverhältnissen Melamin:Formaldehyd von 1:(1,12 bis 1) in Gegenwart von Äthylen- und/oder Propylenharnstoff kondensiert wird.

2. Verfahren nach Anspruch 1, dadurch gekennzeichnet, daß Melamin und Formaldehyd im Molverhältnis 1:(1,2 bis 1,12) eingesetzt werden.

3. Verfahren nach Anspruch 1 oder 2, dadurch gekennzeichnet, daß in Gegenwart von 0,05 bis 0,8 Gew.% Elektrolyt, bezogen auf den Festkörpergehalt des fertigen Harzes, kondensiert wird.

4. Verfahren nach einem oder mehreren der Ansprüche 1 bis 3, dadurch gekennzeichnet, daß in Gegenwart eines Alkalihydroxids, Alkalikarbonats und/oder Aminoalkohols kondensiert wird.

5. Verfahren nach einem oder mehreren der Ansprüche 1 bis 4, dadurch gekennzeichnet, daß bei Temperaturen von 50 bis 150°C bis zu einer Wasserverdünnbarkeit von 1:(0,5 bis 1,1) kondensiert wird.

6. Verfahren nach einem oder mehreren der Ansprüche 1 bis 5, dadurch gekennzeichnet, daß, bezogen auf den Festkörpergehalt, bis zu 5 Gew.% eines Glykols der allgemeinen Formel II

$$HO-(CH_2-\underset{\displaystyle R'}{\underset{|}{C}}HO)_m-H \qquad (II)$$

wobei R', —H, $-CH_3$ oder $-CH_2OH$ und m eine ganze Zahl von 1 bis 4 bedeutet, hinzugefügt werden.

7. Verwendung der nach einem oder mehreren der Ansprüche 1 bis 6 hergestellten Harze zur Herstellung von Aminoplastpreßmassen mit einem Verhältnis Harz:Füllstoff von 1:(0,42 bis 3) in an sich bekannter Weise.

**Claims for the Contracting States: BE CH DE FR GB IT NL SE**

1. Partially etherified melamine-formaldehyde resin with a melamine:formaldehyde molar ratio of 1:(1.25 to 1), characterised in that it is etherified with a glycol monoether of the general formula I

$$R(OCH_2CH_2)_nOH \qquad (I)$$

wherein R denotes alkyl having 1 to 4 C atoms and n denotes an integer from 1 to 5.

2. Partially etherified melamine-formaldehyde resin according to claim 1, characterised by a melamine:formaldehyde molar ratio of 1:(1.2 to 1.12).

3. Partially etherified melamine-formaldehyde resin according to Claim 1 or 2, characterised in

that it contains, relative to its solids content, up to 5% by weight of a glycol of the general formula II

$$HO—(CH_2—\underset{\displaystyle R'}{\underset{|}{CH}}O)_m—H \qquad (II)$$

wherein R' denotes —H, $—CH_3$ or $—CH_2OH$ and m denotes an integer from 1 to 4.

4. Partially etherified melamine-formaldehyde resin according to one or several of Claims 1 to 3, characterised in that, at a melamine:formaldehyde molar ratio of 1:(1.12 to 1), it also contains, besides melamine, ethyleneurea and/or propyleneurea.

5. Process for the manufacture of partially etherified melamine-formaldehyde resins of Claims 1 to 4, characterised in that melamine and formaldehyde in a molar ratio of 1:(1.25 to 1) are subjected to a condensation reaction until a dilutability with water of 1:(0.5 to 2.5) is reached, in the presence of a glycol monoether of the general formula I

$$R(OCH_2CH_2)_nOH \qquad (I)$$

wherein R denotes alkyl having 1 to 4 C atoms and n denotes an integer from 1 to 5, and in the presence of an electrolyte such that it sets up an approximately neutral to weakly alkaline pH value, the condensation reaction being carried out at melamine:formaldehyde molar ratios of 1:(1.12 to 1) in the presence of ethyleneurea and/or propyleneurea.

6. Process according to Claim 5, characterised in that the condensation reaction is carried out in the presence of 0.05 to 0.8% by weight of electrolyte, relative to the solids content of the finished resin.

7. Process according to Claim 5 or 6, characterised in that the condensation reaction is carried out in the presence of an alkali metal hydroxide, alkali metal carbonate and/or amino-alcohol.

8. Process according to one or several of Claims 5 to 7, characterised in that the condensation reaction is carried out at temperatures of 50 to 150°C until a dilutability with water of 1:(0.5 to 1.1) is reached.

9. Process according to one or several of Claims 5 to 8, characterised in that, relative to the solids content, up to 5% by weight of glycol of the general formula II

$$HO—(CH_2—\underset{\displaystyle R'}{\underset{|}{CH}}O)_m—H \qquad (II)$$

wherein R' denotes —H, $—CH_3$ or $—CH_2OH$ and m denotes an integer from 1 to 4, are added.

10. Aminoplast compression moulding composition having a resin:filler ratio of 1:(0.42 to 3), characterised in that it has been prepared in a manner known by itself from the filler, additives and the resin according to one or several of claims 1 to 4.

**Claims for the Contracting State: AT**

1. Process for preparing partially etherified melamine-formaldehyde resins with a melamine:formaldehyde ratio of 1:(1.25 to 1), characterised in that melamine and formaldehyde in a molar ratio of 1:(1.25 to 1) are subjected to a condensation reaction until a dilutability with water of 1:(0.5 to 2.5) is reached, in the presence of a glycol monoether of the general formula I

$$R(OCH_2CH_2)_nOH \qquad (I)$$

wherein R denotes alkyl having 1 to 4 C atoms and n denotes an integer from 1 to 5, and in the presence of an electrolyte such that it sets up an approximately neutral to weakly alkaline pH value, the condensation reaction being carried out at melamine:formaldehyde molar ratios of 1:(1.12 to 1) in the presence of ethyleneurea and/or propyleneurea.

2. Process according to Claim 1, characterised in that melamine and formaldehyde are employed in a molar ratio of 1:(1.2 to 1.12).

3. Process according to Claim 1 or 2, characterised in that the condensation reaction is carried out in the presence of 0.05 to 0.8% by weight of electrolyte, relative to the solids content of the finished resin.

4. Process according to one or several of Claims 1 to 3, characterised in that the condensation reaction is carried out in the presence of an alkali metal hydroxide, alkali metal carbonate and/or amino-alcohol.

5. Process according to one or several of Claims 1 to 4, characterised in that the condensation reaction is carried out at temperatures of 50 to 150°C until a dilutability with water of 1:(0.5 to 1.1) is reached.

6. Process according to one or several of Claims 1 to 5, characterised in that, relative to the solids content, up to 5% by weight of a glycol of the general formula II

$$HO-(CH_2-\underset{\displaystyle R'}{\underset{|}{C}}HO)_m-H \qquad (II)$$

wherein R' denotes —H, $-CH_3$ or $-CH_2OH$ and m denotes an integer from 1 to 4, are added.

7. Use of the resins prepared according to one or several of Claims 1 to 6 for the manufacture of aminoplast compression moulding compositions having a resin:filler ratio of 1:(0.42 to 3) in a manner known by itself.

**Revendications pour les Etats contractants: BE CH DE FR GB IT NL SE**

1. Résine mélamine-formaldéhyde partiellement éthérifiée dans laquelle le rapport malaire de la mélamine au formaldéhyde est compris entre 1:1,25 et 1, résine caractérisée en ce qu'elle est éthérifiée par un monoéther de glycol répondant à la formule générale I

$$R(OCH_2CH_2)_nOH \qquad (I)$$

dans laquelle R représente un radical alkyle contenant de 1 à 4 atomes de carbone et n désigne un nombre entier de 1 à 5.

2. Résine mélamine-formaldéhyde partiellement éthérifiée selon la revendication 1, caractérisée en ce qu'elle a un rapport molaire mélamine/formaldéhyde compris entre 1:1,2 et 1:1,12.

3. Résine mélamine-formaldéhyde partiellement éthérifiée selon l'une des revendications 1 et 2, caractérisée en ce qu'elle contient, par rapport à son extrait sec, au plus 5% en poids d'un glycol répondant à la formule générale II

$$HO-(CH_2-\underset{\displaystyle R'}{\underset{|}{C}}HO)_m-H \qquad (II)$$

dans laquelle R' représente —H, $-CH_3$ ou $-CH_2OH$ et m désigne un nombre entier de 1 à 4.

4. Résine mélamine-formaldéhyde partiellement éthérifiée selon une ou plusieurs des revendications 1 à 3, caractérisée en ce qu'elle contient de l'éthylène-urée et/ou de la propylène-urée en plus de la mélamine, son rapport molaire mélamine/formaldéhyde étant compris entre 1:1,12 et 1:1.

5. Procédé de préparation de résines mélamine-formaldéhyde partiellement éthérifiées selon l'une quelconque des revendications 1 à 4, procédé caractérisé en ce qu'on condense la mélamine et le formaldéhyde dans un rapport molaire compris entre 1:1,25 et 1:1, en présence d'un monoéther de glycol répondant à la formule générale I

$$R(OCH_2CH_2)_nOH \qquad (I)$$

dans laquelle R représente un radical alkyle contenant de 1 à 4 atomes de carbone et n désigne un nombre entier de 1 à 5, et en présence d'un électrolyte apte à amener le pH à peu près dans le domaine de la neutralité ou de la légère alcalinité, la condensation étant poursuivie jusqu'à ce que la diluabilité à l'eau ait atteint une valeur comprise entre 1:0,5 et 1:2,5, et la condensation étant effectuée, lorsque le rapport molaire mélamine/formaldéhyde est compris entre 1:1,12 et 1:1, en présence d'éthylène-urée et/ou de propylène-urée.

6. Procédé selon la revendication 5 caractérisé en ce qu'on effectue la condensation en présence de 0,05 à 0,8% en poids d'un électrolyte, par rapport à l'extrait sec de la résine finie.

7. Procédé selon l'une des revendications 5 et 6, caractérisé en ce qu'on effectue la condensation en présence d'un hydroxyde de métal alcalin, d'un carbonate de métal alcalin et/ou d'un amino-alcool.

8. Procédé selon l'une ou plusieurs des revendications 5 à 7, caractérisé en ce qu'on effectue la condensation à des températures de 50 à 150°C jusqu'a ce que la diluabilité à l'eau ait atteint une valeur comprise entre 1:0,5 et 1:1,1.

9. Procédé selon l'une ou plusieurs des revendications 5 à 8, caractérisé en ce qu'on ajoute, par rapport à l'extrait sec, au plus 5% en poids d'un glycol répondant à la formule générale II

$$HO-(CH_2-\underset{\displaystyle R'}{\underset{|}{C}}HO)_m-H \qquad (II)$$

dans laquelle R' représente —H, $-CH_3$ ou $-CH_2OH$ et m désigne un nombre entier de 1 à 4.

10. Matière à mouler à base d'une résine aminoplaste, dans laquelle le rapport résine/charge est

compris entre 1:0,42 et 1:3, matière caractérisée en ce qu'elle a été préparée de manière connue à partir d'une charge, d'additifs et d'une résine selon une ou plusieurs des revendications 1 à 4.

**Revendications pour l'Etat contractant: AT**

1. Procédé de préparation de résines mélamine-formaldéhyde partiellement éthérifiées avec un rapport molaire mélamine/formaldehyde compris entre 1:1,25 et 1:1, caractérisé en ce qu'on condense la mélamine et le formaldéhyde dans un rapport molaire compris entre 1:1,25 et 1:1, en présence d'un monoéther de glycol répondant à la formule générale

$$R(OCH_2CH_2)_nOH \qquad (I)$$

dans laquelle R représente un radical alkyle contenant de 1 à 4 atomes de carbone et n désigne un nombre entier de 1 à 5, et en présence d'un électrolyte apte à amener le pH à peu près dans le domaine de la neutralité ou de la légère alcalinité, la condensation étant poursuivie jusqu'à ce que la diluabilité à l'eau ait atteint une valeur comprise entre 1:0,5 et 1:2,5, et la condensation étant effectuée, lorsque le rapport molaire mélamine/formaldéhyde est comprise entre 1:1,12 et 1:1, en présence d'éthylène-urée et/ou de propylène-urée.

2. Procédé selon la revendication 1, caractérisé en ce que la mélamine et le formaldehyde sont utilisés dans un rapport molaire compris entre 1:1,2 et 1:1,12.

3. Procédé selon l'une des revendications 1 et 2, caractérisé en ce qu'on effectue la condensation en présence de 0,05 à 0,8% en poids d'un électrolyte, par rapport à l'extrait sec de la résine finie.

4. Procédé selon l'une ou plusieurs des revendications 1 à 3, caractérisé en ce qu'on effectue la condensation en présence d'un hydroxyde de métal alcalin, d'un carbonate de métal alcalin et/ou d'un amino-alcool.

5. Procédé selon l'une ou plusieurs des revendications 1 à 4, caractérisé en ce qu'on effectue la condensation à des températures de 50 à 150°C jusqu'à ce que la diluabilité à l'eau ait atteint une valeur comprise entre 1:0,5 et 1:1,1.

6. Procédé selon l'une ou plusieurs des revendications 1 à 5, caractérisé en ce qu'on ajoute, par rapport à l'extrait sec, au plus 5% en poids d'un glycol répondant à la formule générale II

$$HO{-}(CH_2{-}\underset{\displaystyle R'}{\underset{|}{CH}}O)_m{-}H \qquad (II)$$

dans laquelle R' représente $-H$, $-CH_3$ ou $-CH_2OH$ et m désigne un nombre entier de 1 à 4.

7. Utilisation des résines produites selon l'une ou plusieurs des revendications 1 à 6 pour préparer de manière connue des matières à mouler à base de résines aminoplastes, dans lesquelles le rapport résine/charge est compris entre 1:0,42 et 1:3.